# EUROPÄISCHE PATENTSCHRIFT

(11) **EP 3 211 972 B1**
(45) Veröffentlichungstag und Bekanntmachung des Hinweises auf die Patenterteilung: **07.08.2019**
(21) Anmeldenummer: 17151639.6
(22) Anmeldetag: 16.01.2017
(51) Int. Cl.: H05B 37/02, H05B 33/08, F21S 6/00

(54) **STEHLEUCHTE MIT SPEICHERPROGRAMMIERBARER STEUERUNG ZUR TAGESLICHT- ODER FREMDLICHTABHÄNGIGEN SPARSAMEN STEUERUNG DER LICHTSTÄRKE DIREKTER UND INDIREKTER BELEUCHTUNG**
FLOOR LAMP COMPRISING A PROGRAMMABLE CONTROL UNIT FOR ENERGY EFFICIENT AND AMBIENT LIGHT DEPENDENT CONTROL OF DIRECT ILLUMINATION AND INDIRECT ILLUMINATION
LAMPE DE SOL AVEC UNE UNITÉ COMMANDE PROGRAMMABLE POUR CONTRÔLER UN ÉCLAIRAGE DIRECT ET UN ÉCLAIRAGE INDIRECT DE FAÇON ÉCONOMIQUE ET EN FONCTION DE LA LUMIÈRE AMBIANTE

(30) Priorität: 25.02.2016 CH 2442016
(43) Veröffentlichungstag der Anmeldung: 30.08.2017
(73) Patentinhaber: Alteme Licht AG, 5001 Aarau (CH)
(72) Erfinder: Horath, René, 4055 Basel (CH)
(74) Vertreter: Felber, Josef

(56) Entgegenhaltungen:
- EP-A1- 2 804 443
- WO-A1-2014/115048
- DE-A1-102012 219 894

## Beschreibung

Diese Erfindung betrifft eine Stehleuchte mit tageslicht- oder fremdlichtabhängiger sparsamer Steuerung (Economical Daylight Regulation EDR). Dabei werden mittels einer speicherprogrammierbaren Steuerung die direkten und die indirekten Lichtquellen aufgrund gerichteter Licht-Sensorik asynchron und mit einer Einschaltverzögerung gesteuert. Büroräume werden heute vorwiegend mit autonomen Stehleuchten beleuchtet, die mit LED Leuchtmitteln bestückt werden. Im Gegensatz zu den früher üblichen Kompaktleuchtstofflampen können die neuen Lichtquellen wie z.B. LED-Leuchtmittel oder OLED-Leuchtmittel gezielter das Licht in eine definierte Richtung abstrahlen, da sie das Licht in der Regel nur maximal im Winkel von 120-180° abstrahlen und nicht wie bei den Kompaktleuchtstoffröhren rundum im Winkel von nahezu 360°. Diese Stehleuchten sind in der Regel unter anderem mit Tageslichtsensoren ausgerüstet, die ein der Umgebungshelligkeit entsprechendes Dimmen der Lichtquellen ermöglichen.

In der Regel werden die total mindestens zwei Leuchtmittel einer Stehleuchte von einem elektronischen Betriebsgerät betrieben, die Dimmung der einzelnen Leuchtmittel erfolgt direkt durch PWM oder Amplitudendimmung der Steuereinheit. Die Steuereinheit kann mittels manuellem Taster auf der Steuereinheit, durch externe Taster, welche mit der Steuereinheit verbunden sind oder durch eine kabellose digitale Schnittstelle mit einem externen Bediengerät gedimmt werden. Nach Betätigung der Dimmfunktion wird mit einer Zeitverzögerung der gemessene Helligkeitswert beim Lichtsensor als Sollhelligkeits-Wert gespeichert. Die Steuereinheit regelt bzw. dimmt die Leuchtmittel nun in Abhängigkeit der Umgebungshelligkeit bis der gespeicherte Soll-Helligkeitswert erreicht wird. Wird der Soll-Helligkeitswert bereits durch das Umgebungslicht erreicht, werden die Leuchtmittel bis auf 0% heruntergedimmt bzw. ausgeschaltet. Mit einer Zeitverzögerung trennt die Steuereinheit durch einen Relaiskontakt die Stromzufuhr zum Betriebsgerät.

In Kauf genommen wird dabei, dass der Betriebswirkungsgrad des Systems Lichtquellen/Betriebsgerät mit zunehmendem Dimm-Level abnimmt. Der Energiebedarf eines im 1-3% Modus betriebenen Systems beträgt noch immer bis zu 1-3W pro Betriebsgerät und im Standby-Modus ca. >0.5W. Durch das Kappen der Stromzufuhr zum Betriebsgerät durch den Relaiskontakt kann die Standby-Leistung des Betriebsgeräts eingespart werden. Die resultierende effektive Standby-Leistung ergibt sich nur noch durch den Strombedarf der Steuereinheit selbst und deren optionalen Funkschnittstellen.

Die Steuerelektronik vermag in Kombination mit sogenannten dimmbaren, elektronischen Betriebsgeräten und den dimmbaren LED-Leuchtmitteln die Leistung von 100% auf rund 3-0% zu regulieren. Dabei werden alle LED-Leuchtmittel synchron gedimmt. Allerdings verschlechtert sich der Betriebswirkungsgrad des Systems Lichtquellen/Betriebsgerät mit zunehmendem Dimm-Level.

Büroräume werden heute weitgehend mit Stehleuchten beleuchtet. Sie bieten Individualität und Mobilität und bei entsprechender Ausführung Potenzial zum Energiesparen. Die Stehleuchten, die im Office-Bereich zum Einsatz gelangen, werden heute fast ausschliesslich mit mehreren LED-Leuchtmitteln betrieben, welche einerseits nach unten gerichtet als Direkt- und nach oben gerichtete als Indirektlicht eingebaut sind. Eine seitliche Einkopplung des Lichts und Umlenkung des Lichts nach oben oder unten ist eine weitere Möglichkeit. Diese Lichtquellen bieten einen hohen Wirkungsgrad, eine gute Farbwiedergabe und eine Dimmmöglichkeit (PWM, Amplitudendimmung). Letztere ermöglicht eine den Bedürfnissen bzw. der Umgebungshelligkeit entsprechende Regulierung der Leuchtmittel / Stehleuchten in Räumen mit Tageslicht- oder Fremdlichtanteil. Sie werden also mit Tagesanbruch zunehmend gedimmt, später ausgeschaltet und nach Einbruch der Dämmerung wieder eingeschaltet und hochgedimmt. Bei durchschnittlicher Bürobenutzung wird also eine dimmbare Stehleuchte nur selten im 100%-Betrieb im Einsatz sein. Und bei bedecktem Himmel reicht oft ein Betrieb im Teillastbereich von 0 bis 50%. Die Stehleuchten werden in Bezug auf den Indirekt- und Direktlichtanteil synchron gedimmt. In der Anwendung ist aber der Indirektlichtanteil stark von der Raumhöhe und dem Reflektionsgrad der Decke abhängig, wobei das Direktlicht direkt ohne weitere grosse Verluste genutzt werden kann. DE 10 2012 219894 A1 zeigt eine Regelung oder Steuerung einer Leuchte, mit welcher der Indirektlichtanteil und der Direktlichtanteil der Leuchte unabhängig voneinander herabgedimmt werden können, also getrennt voneinander steuerbar oder regelbar sind. Vorzugsweise wird zuerst der Indirektlichtanteil heruntergedimmt und anschliessend der Direktlichtanteil. WO 2014/115048 A1 zeigt eine Beleuchtungseinrichtung mit zwei Lichtstrahlen mit unterschiedlicher Lichtintensität, wobei der eine aufwärts an eine Decke strahlt und der andere nach unten auf eine Arbeitsfläche. Die beiden Lichtstrahlen sind unabhängig voneinander steuerbar oder regelbar. Mit einer Steuerung (Controller) können die Dimmgrade so geführt werden, dass in einem bestimmten Bereich der Leuchtintensität der Dimmgrad des ersten Lichtstrahls in einem bestimmten Verhältnis zum Dimmgrad des zweiten Lichtstrahls gehalten wird. EP 2 804 443 A1 zeigt ein Verfahren zum Betreiben einer Leuchte. Dabei wird aus der Gesamtleuchtmenge eine errechnete Lichtmenge der direkten Lichtmenge von jener für die indirekte Lichtmenge substrahiert und nach Massgabe der an einem Lichtsensor ankommenden und von der erzeugten direkten Leuchtmenge sowie eines allenfalls vorhandenen Fremdlichtes die Leuchte angesteuert sowie ein- und ausgeschaltet. Die beiden letztgenannten Dokumente offenbaren also Stehleuchten mit zugehöriger Steuerungen der Lichtleistung, wobei die Stehleuchte mindestens zwei Leuchtmittel einschliesst, welche mit der Steuerung asynchron ansteuerbar bzw. regulierbar sind. Die Steuerungen sind speicherprogrammierbar und mit ihnen kann nach Massgabe des aktuellen Tages- oder Fremdlichtes bei ansteigendem Tages- oder Fremdlicht der ineffizientere Indirektlichtanteil, der von der Stehleuchte nicht in Richtung einer Arbeitsfläche abgestrahlt wird, und der für die Beleuchtung einer Arbeitsfläche effizientere Direktlichtanteil heruntergedimmt und dann ausgeschaltet werden. Die beiden Lichtanteile werden jedoch nicht gezielt individuell und koordiniert heruntergedimmt.

Die Aufgabe der Erfindung ist deshalb, eine Stehleuchte mit einer Steuerung anzugeben, welche das Licht durch Regelung dem kontinuierlich wechselnden Tageslicht besser nachführt und es gleichzeitig ermöglicht, die damit verbundene Abnahme des Betriebswirkungsgrades zu reduzieren und somit elektrische Energie einzusparen. Zudem soll das in der Anwendung effizientere und von der Raumgeometrie unabhängigere Direktlicht längstmöglich genutzt und erst im unteren Teillastbereich gedimmt werden, was in der Energiebilanz zu einer geringeren Systemleistung bei gleicher Ausleuchtung des Arbeitstisches führen soll.

Diese Aufgabe wird gelöst von einer Stehleuchte nach Patentanspruch 1.

Die Erfindung wird anhand einiger Figuren näher beschrieben und die Funktion der speicherprogrammierbare Steuerung wird anhand dieser Figuren erklärt.

Es zeigt:
- Figur 1:: ein asynchrones Dimmverhalten schematisch dargestellt;
- Figur 2:: Die Steuerungskomponenten schematisch dargestellt;
- Figur 3:: Die Steuerung für eine Indirekt- und eine Direktlichtquelle schematisch dargestellt;
- Figur 4:: Den Leuchtenrahmen mit den Komponenten für die Steuerung;
- Figur 5:: Eine Stehleuchte für einen Bürotisch im praktischen Einsatz;
- Figur 6:: Eine Leuchte mit nach oben und unten abstrahlenden LEDs;
- Figur 7:: Eine Leuchte mit durch Reflexion an einem Reflektor nach oben und unten abstrahlenden LEDs;
- Figur 8:: Eine Leuchte wie nach Figur 7, mit seitlich Licht eingekoppelten Lichtleiterplatten, mit durch Reflexion nach oben und unten abstrahlenden LEDs, jedoch mit einer Reflektortrennschicht;
- Figur 9:: Eine schematische Darstellung des Dimmverhaltens und der damit erzielbaren Leistungseinsparung;
- Figur 10:: Eine *Random Power On* Schaltung in Form eines Funktions-Schemas der Einschaltverzögerung;
- Figur 11:: Eine *Oriented and Calibrated Light Sensoric* mit Grafik über die Funktion der gerichteten Lichtsensorik und Leuchtenkalibration.

Eine herkömmliche Steuerelektronik vermag in Kombination mit sogenannten dimmbaren, elektronischen Betriebsgeräten und den dimmbaren LED-Leuchtmitteln die Lichtleistung wohl von 100% auf 1% zu regulieren. Dabei werden aber alle Lichtquellen meistens synchron gedimmt. Allerdings verschlechtert sich der Betriebswirkungsgrad des Systems in Bezug auf die Indirekt-/Direktlichtquelle mit zunehmendem Dimm-Level, da das in der Anwendung effizientere Direktlicht synchron mit dem ineffizienteren Indirektlicht gedimmt wird, um auf den Soll-Helligkeitswert nachzuregulieren.

Diesem Effekt wird erfindungsgemäss begegnet, indem die entwickelte speicherprogrammierbare Steuerung mit ihrer Elektronik die Indirekt- bzw. Direktlichtquellen asynchron dimmt. Damit wird eine tageslichtabhängige bzw. fremdlichtabhängige sparsame Steuerung der Stehleuchten erzielt (Economical Daylight Regulation EDR). Hierzu werden mittels einer speicherprogrammierbaren Steuerungselektronik die direkten und die indirekten Lichtquellen aufgrund gerichteter Licht-Sensorik asynchron und mit einer Einschaltverzögerung gesteuert. Um die Leuchte im optimierten Teillastbereich zu betreiben, wird das in der Anwendung ineffizientere Indirektlicht zunächst bis auf ein Niveau von 40% gedimmt. Der effizientere Direktlichtanteil wird erst danach von 100% zusammen mit dem unwirtschaftlicheren Indirektlicht auf 0% herunter gedimmt. Die tageslicht- und fremdlichtabhängige Stehleuchtensteuerung mit asynchroner Lichtquellenregulierung trägt also dem folgenden Effekt Rechnung: Die Elektronik steuert jede Lichtquelle separat an. So kann mittels entsprechender Software erst die Indirektlicht- und dann die andere Direktlichtquelle angesteuert bzw. gedimmt werden. Für den 40%-lndirektlichtbetrieb der Stehleuchte kann also das Direktlicht mit 100% betrieben werden, während das Indirektlicht gedimmt wird. Im <40%-Indirektlichtbetrieb der Stehleuchte wird das Indirekt- und Direktlicht gemeinsam gedimmt. Die realisierbare Energieeinsparung steigt mit zunehmendem Dimm-Level bis über 10-30% gegenüber vergleichbaren Leuchtensystemen.

Voraussetzung für die asynchrone Regulierung ist die hardwareseitige Möglichkeit der Steuerelektronik, die einzelnen Lichtquellen separat anzusteuern. Die Elektronik misst über einen Lichtsensor mittels z.B. einer Foto-Diode die Beleuchtungsverhältnisse im Bereich der Stehleuchte und vergleicht den gemessenen Wert mit dem Sollhelligkeits-Wert, d.h. der Werkseinstellung oder dem vom Benutzer definierten Wert. Durch geeignete Ansteuerung bzw. Regelung der Lichtquellen wird durch einen in der Leuchten-Steuerung integrierten elektronischen Prozessor/Regelkreis die über die Foto-Diode gemessene Beleuchtungsstärke über einen weiten Bereich auf den Sollhelligkeits-Wert nachgeregelt.

Die maximal mögliche Gesamt-Beleuchtungsleistung von 100% wird dann abgegeben, wenn beide Leuchtmittel von der Steuerung mit der definierten Volllast betrieben werden. Zur Kalibrierung der einzelnen Kanäle werden die Leuchtmittel auch bei Volllast mit einem PWM-Signal betrieben, um eine möglichst enge Toleranz bezüglich der Lichtintensität gewährleisten zu können. Alternativ kann auch eine Kalibrierung der einzelnen Kanäle durch eine spezifische Kalibration pro Kanal durch Amplitudendimmung erfolgen.

Die Systemleistung kann mittels der LED Technologie durch die effizienteren Leuchtmittel gegenüber den früheren Kompaktleuchtstoffröhren deutlich reduziert werden. Dies wirkt sich positiv auf die maximale Leuchten-Anzahl pro Sicherungsschutzschalter aus. Bei den LED-Leuchtmitteln gibt es aber beim Einschalten eine hohe Einschaltstromspitze, welche kurzzeitig zu hoch werden kann und sich negativ auf die maximale Leuchtenanzahl pro Sicherungsschutzschalter auswirkt. In der Praxis kann so meist die maximale zulässige Leistung pro Sicherungsschutzschalter gar nicht ausgeschöpft werden, da beispielsweise bei einem Stromausfall bzw. beim wieder Einschalten der Stromversorgung die entstehende Kumulierung der Einschaltströme der einzelnen Leuchten zum Auslösen des Sicherungsschutzschalters führt, weil alle Leuchten sich gleichzeitig einschalten. Mit der RPO (Random Power On) Technologie kann diesem Effekt entgegengetreten werden. Die Steuerung verfügt über eine eigene Stromversorgung bzw. Treiber (AC/DC-Konverter). Mit einem Relais wird das Betriebsgerät für den Betrieb der LED bei Lichtbedarf eingeschaltet. Bei Stromausfall wird die Leuchte wieder so betrieben, wie sie vor dem Stromausfall betrieben wurde, d.h. wenn sie zuvor geleuchtet hat, schaltet die Leuchte wieder ein, wenn sie aber nicht geleuchtet hat, schaltet sie nicht ein. Mit dieser Funktion kann die Anzahl der einschaltenden Stehleuchten auf ein Minimum begrenzt werden. Zudem schalten die Leuchten zeitverzögert mit einem Zufallsalgorithmus ein, so dass eine Aufkumulierung der Einschaltströme statistisch gesehen vernachlässigt werden bzw. auf ein Minimum begrenzt werden kann. Durch Abschalten per Relais des Betriebsgeräts kann zudem die Standby-Leistung auf ein Minimum reduziert werden.

Der Lichtsensor ist für die Nachregulierung auf den gespeicherten Soll-Helligkeitswert notwendig, wenn sich das Umgebungslicht bzw. das Tageslicht ändert, damit eine gleichbleibende Beleuchtungsstärke auf dem Tisch gewährleistet werden kann. Mehrheitlich befindet sich der Lichtsensor unterhalb des Leuchtenkopf und ist direkt nach unten ausgerichtet. Es gibt diesbezüglich grosse Qualitätsunterschiede der Lichtsensoren, vor allem in Bezug auf den detektierten Bereich, welcher meist nur einen kleinen Bereich direkt unterhalb der Leuchte betrifft. Je nach Leuchtenposition und Oberflächenqualität des Bereichs, der ausgemessen wird, wie z.B. bei einem schwarzen oder weissen Tisch, hat das Eigenlicht der Leuchte und des Umgebungslichts einen anderen Einfluss auf den gemessenen Helligkeitswert. Hier entsteht das Problem, dass die Leuchte je nach den gegebenen Oberflächen- und Raumqualitäten verschieden reguliert. Die nach Norm vorgeschriebene Durchschnittsbeleuchtungsstärke von 500lx im Bereich der Sehaufgabe kann diesbezüglich meist nicht vollumfänglich oder nur mit starker genereller Überbeleuchtung gewährleistet werden.

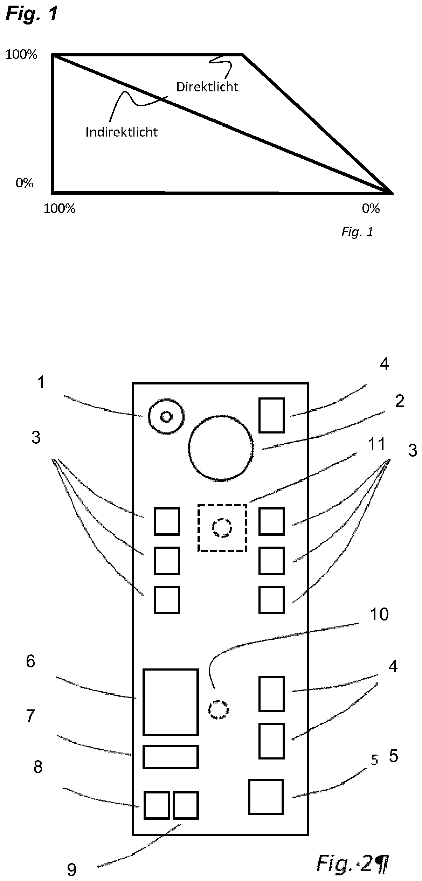

Das gesamte Licht aller eingesetzten Lichtquellen setzt sich stets aus den beiden Anteilen Direktlicht und Indirektlicht zusammen. Wie das schematisch anhand von Figur 1 dargestellt ist, kann mit einer asynchronen Steuerung einer Stehleuchte in der Anwendung der effizientere Direktlichtanteil jeder einzelnen Lichtquelle so lange wie möglich beim Dimmprozess mit 100% Lichtleistung betrieben werden. Das ineffizientere Indirektlicht jeder Lichtquelle, welches vom Reflektionsgrad der Decke sowie auch der Deckenhöhe abhängig ist, wird daher zuerst gedimmt und schliesslich zusammen mit dem Direktlicht auf 0% gedimmt.

Die Figur 2 zeigt eine schematische Abbildung der Steuerelektronik für diese Ansteuerung. Sie schliesst ein Drehpotentiometer 1 für die Einstellung der Nachlaufzeit und den Areatest des Bewegungssensors ein. Die Steuerung schliesst des Weiteren einen PIR-Bewegungssensor 2 ein, welcher in seiner sensitiven Richtung ausrichtbare Anschlüsse 3 für die Leuchtmittel aufweist. Mit 4 sind die Tasteranschlüsse für das Dimmen und Ein-/Ausschalten bezeichnet. Ein Anschluss 5 dient zur Speisung mit elektrischem Strom. Ein Treiber 6 sorgt für die Stromversorgung der Steuerung. Ein Relais 7 dient für das Ein-/Ausschalten des Betriebsgeräts. Es sind weitere Primäranschluss-Treiber 9 und ein Sekundäranschluss-Treiber 8 vorhanden. Der Lichtsensor 10 dient zum ständigen Messen der Lichtverhältnisse. Ein Taster 11 mit Status-LED dient zum Dimmen und für das Ein- und Ausschalten der Steuerung.

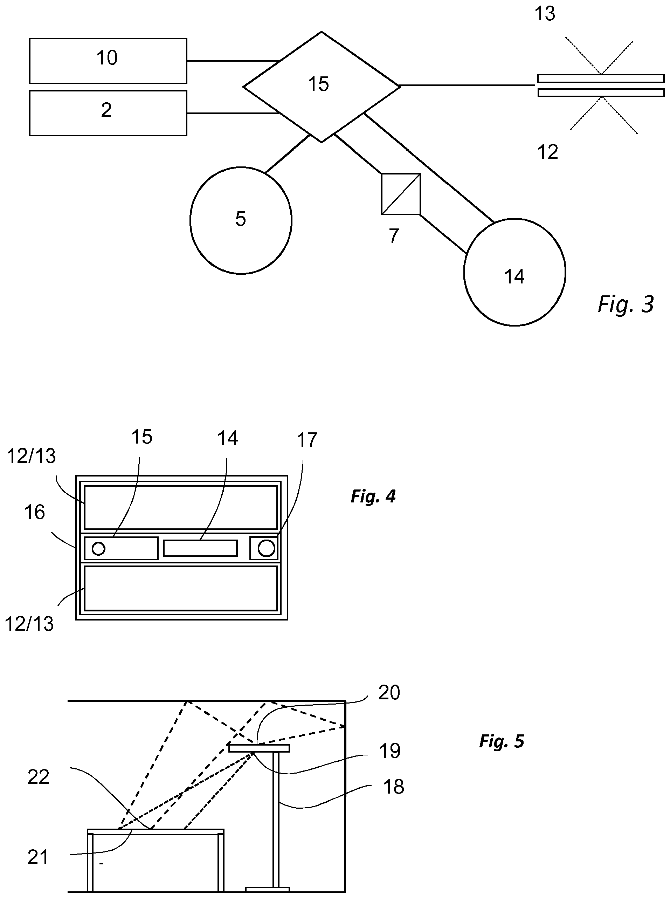

Die Figur 3 zeigt eine Steuerung 15 für eine Indirekt- 13 und eine Direktlichtquelle 12 schematisch dargestellt. Die Steuerung 15 steuert die nach oben an eine Raumdecke abstrahlende Indirektleuchtquelle 13 und die nach unten auf eine Arbeitsfläche abstrahlende Direktlichtquelle 12 an. Sie wird von den Signalen eines Lichtsensors 10 sowie eines Bewegungssensors 2 versorgt. Weiter ist eine Speisung 5 mit elektrischem Strom vorhanden sowie ein Betriebsgerät 14, welches mittels eines Relais 7 ein- und ausschaltbar ist.

Die Figur 4 stellt den Leuchtenrahmen mit den Komponenten der Steuerung dar. Er besteht aus einem Leuchtenrahmenkopf 16, in dem die Leuchtmittel 12,13 untergebracht sind. Die Steuerelektronik 15 steuert diese Leuchtmittel 12,13 an. Das Betriebsgerät 14 für die Speisung der Leuchtmittel ist wie hier gezeigt auch im Leuchtenrahmen untergebracht. Eine Standrohrbefestigung 17 erlaubt es, den Leuchtenrahmen auf einem Standrohr zu befestigen.

Die Figur 5 zeigt eine Stehleuchte 18 für einen Büro- oder Arbeitstisch 21 im praktischen Einsatz. Wie man anhand dieser Figur erkennt, leuchtet eine Direktlichtanteil 19 direkt auf den Arbeitstisch 21, während die Indirektlichtanteile 20 zunächst an der Wand und oder Raumdecke reflektiert werden und erst danach auf die Arbeitstischfläche strahlen. Mit 22 ist der Sehaufgabenbereich auf der Tischfläche bezeichnet.

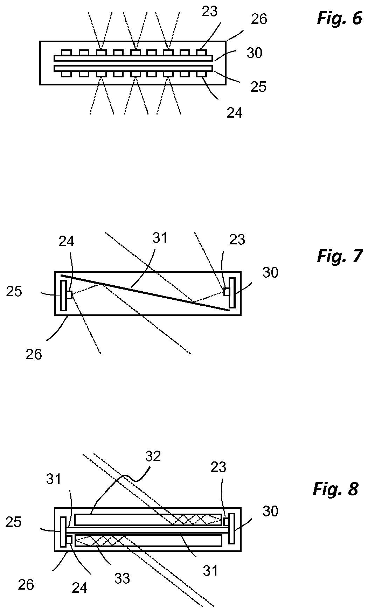

Die Figur 6 zeigt eine Leuchte mit nach oben abstrahlenden LEDs 23, die auf einem Direktlicht-LED-Panel 30 angeordnet sind, und die nach unten abstrahlenden LEDs 24 entsprechend in einem Indirektlicht-LED-Panel 25. Alle diese Komponenten sind im Leuchtenkopf 26 untergebracht.

Die Figur 7 zeigt einen alternativen Leuchtenkopf 26 mit einem Reflektor 31 zum Reflektieren der Lichtstrahlen der nach oben und unten abstrahlenden LEDs 23,24.

Die Figur 8 zeigt eine Leuchte wie nach Figur 7, mit durch Reflexion mittels der Lichtleiterplatten 32,33 nach oben und nach oben und unten abstrahlenden LEDs 23,24, jedoch mit einer Reflektortrennschicht 31, sodass diese beiden Lichtanteile stets sauber getrennt steuerbar sind.

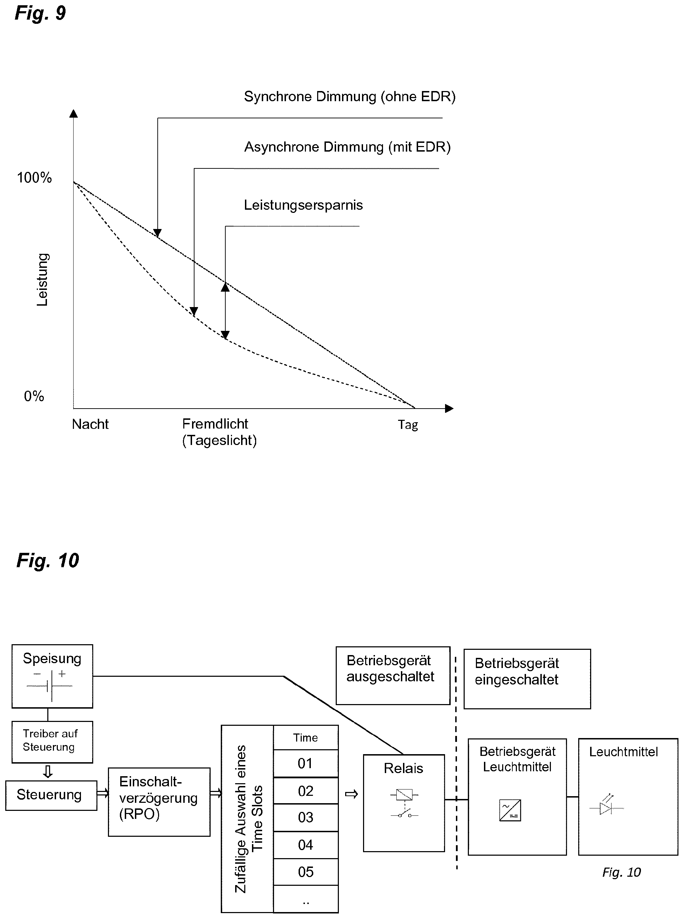

In Figur 9 ist eine schematische Darstellung des Dimmverhaltens und der damit erzielbaren Leistungseinsparung gezeigt. Wie man erkennt, verläuft die Kurve der Lichtausbeute zwischen 100% und 0% mit einer konventionellen Leuchte und Dimmung linear, während die asynchronen Dimmung nach dieser hier vorgestellten Steuerung nicht linear verläuft, sondern einen Bogen beschreibt und unter die Linie der linearen Lichtausbeute abfällt. Die Differenz reflektiert die Einsparung an nötiger Leistung.

Die Figur 10 zeigt eine *Random Power On* Schaltung in Form eines Funktions-Schemas, mit den Komponenten Speisung, Treiber, Steuerung, Zeitverzögerung und Zeitslot-Auswahl, dem Relais, Betriebsgerät und den Leuchtmitteln, und zwar im eingeschalteten wie auch im ausgeschalteten Zustand.

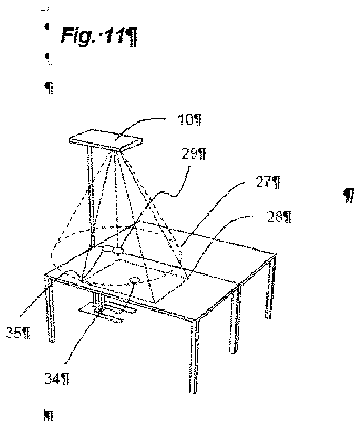

Die Figur 11 zeigt schliesslich den Detektionsbereich des Lichtsensors 10, im Vergleich zu einer konventionellen Lichtsensorik 27 und einer gerichteten Lichtsensorik 28 (*Oriented and Calibrated Light Sensoric* OCLS). Die Lichtsensorik detektiert vom Leuchtenrahmenkopf 16 aus genau auf den gewünschten Bereich 28 des Arbeitstisches, und die Lichtstärke ist genau auf die Tageszeit bzw. auf die Helligkeit des Raumes abgestimmt und verändert sich mit der Tageszeit oder einer anderswie eintretenden Verdunkelung automatisch. Mit einem zusätzlichen Sensor 35 kann laufend die auf die Arbeitsfläche strahlende Lichthelligkeit ermittelt werden. Wenn also die Sonne in den Raum scheint, und plötzlich Wolken aufziehen oder ein Gewitter aufkommt und es tagsüber überraschend dunkel wird, so reagiert die Steuerung automatisch und gleicht das aus. Die ermittelten Helligkeitswerte werden dann laufend mit den detektierten Messwerten des Lichtsensors 10 und dem maximalen Lichteinfluss der Leuchte verrechnet. Der maximale Lichteinfluss der Leuchte wird durch Kalibrierung der Leuchte ermittelt, d.h. es wird der Helligkeitsunterschied bei ausgeschalteten Leuchtmitteln und voller Lichtleistung gemessen.

Beim Einsatz von LED-Lichtquellen und deren Betriebsgeräten entsteht beim Einschalten meist ein kurzzeitige sehr hohe Stromspitze. Bei der Definition der maximalen Leuchten-Stückzahl pro Leistungsschutzschalter ist daher meist nicht die kumulierte Gesamtleistung der Stehleuchten massgebend, sondern die sich kumulierenden Einschaltstromspitzen. Die erfindungsgemässe Steuerung optimiert und verringert die Kumulierung der Einschaltstromspitzen durch den Einsatz eines Relais und dessen Einschaltalgorithmus. Diesem Effekt einer zu hohen einzigen Stromspitze wird begegnet, in dem die neu entwickelte Steuerung die Lichtquellen einzeln ansteuert und asynchron dimmt.

Die Trennung des Indirektlicht-bzw. Direktlichtanteils kann wie dargestellt durch nach unten und oben scheinende LED-Leuchtmittel erfolgen, durch seitlich scheinende LED-Leuchtmittel, welche mit Reflektoren getrennt das Licht einerseits nach oben sowie auch nach unten umlenken, oder durch zwei aufeinanderliegende Kanten einspeisende Lichtleiterplatten erfolgen. Mit der *Oriented and Calibrated Light Sensoric* (OCLS) Technologie gelingt es, den Einfluss des Eigenlichts zu detektieren und dementsprechend die Mindestanforderung von 500lx durch Optimierung der Dimmkurve zu gewährleisten. Durch eine manuelle Kalibrierung der Leuchten-Steuerung in einem speziellen Kalibrierungsmodus kann die Dimmkurve den äusseren Gegebenheiten angepasst werden. Dies wird durch schnelles Ein- und Ausschalten des Indirekt- und Direktlichtanteil sichergestellt. Dabei wird deren maximaler bzw. minimaler Einfluss bzw. Helligkeitswert beim Lichtsensor auf der Leuchtensteuerung oder einem externen Sensor (durch kabellose Übertragung der Messdaten an die Steuerung) gemessenen. Aus diesen Daten kann der maximale Helligkeitsunterschied, bzw. Lichteinfluss der Leuchte errechnet werden. Mit diesen Daten wird die hinterlegte Dimmkurve demensprechend optimiert und die Mindestbeleuchtungsstärke von 500lx gewährleistet. Zusätzlich wird der Detektionsbereich des Lichtsensors durch eine Primäroptik auf den Bereich der Sehaufgabe 28 (Fig. 11) beim Arbeitstisch möglichst breit ausgerichtet und ein Durchschnittshelligkeitswert ermittelt.

In der Praxis kommen meist aus Kostengründen 2er Arbeitsplatzstehleuchten zum Einsatz. Heutzutage werden in den Büros vermehrt höhenverstellbare Tische verwendet. Da die Stehleuchten nur über einen Licht- bzw. Bewegungssensor verfügen, ist eine separate Steuerung bzw. angepasste Ausleuchtung pro Arbeitsplatz nicht möglich. Dies hat zur Folge, dass bei der Höhenverstellung eines Arbeitsplatzes die Situation eintreffen kann, dass der zweite Arbeitsplatz ungenügend ausgeleuchtet wird oder auch zu stark beleuchtet wird.

Mit einer *Oriented and Calibrated Light Sensoric* (OCLS) Technologie kann durch Einsatz zusätzlicher Licht-, Distanz-, aber auch Bewegungssensoren eine separate und optimierte Nachregelung pro Arbeitsplatz gewährleistet werden. Die zusätzlichen Sensoren sind entweder direkt am Leuchtenkopf oder über eine externe Sensorik mit kabelloser Datenübertragung mit der Steuerung verbunden. Es kann ein spezifischer Soll-Helligkeitswert pro Arbeitsplatz bei der Steuerung gespeichert werden. Die Speicherung erfolgt zeitverzögert nach manuellem Dimmen.

Mit einem asynchrones Dimmverhalten kann also der effizientere Direktlichtanteil möglichst lange genutzt werden. Der ineffizientere Indirektlichtanteil wird zuerst gedimmt, was bei gleicher Ausleuchtungsqualität der Arbeitsplatzoberfläche zu einer Energieeinsparung führt. Ausserdem trennt mit einer zeitlichen Verzögerung die Steuerung z.B. durch einen Relaiskontakt die Stromversorgung vom Betriebsgerät ab, um die Standbyleistung des Betriebsgerätes zusätzlich einsparen zu können. Die Zeitverzögerung basiert auf einem Zufallsalgorithmus, um eine Kummulierung der Einschaltstromspitzen zu minimieren.

### Ziffernverzeichnis

- 1: Drehpotentiometer
- 2: Bewegungssensor
- 3: Anschlüsse Leuchtmittel
- 4: Tasteranschlüsse
- 5: Anlschluss für Speisung
- 6: Treiber / AC/DC Konverter der Steuerung
- 7: Relais
- 8: Sekundäranschluss-Treiber
- 9: Primäaranschluss-Treiber
- 10: Lichtsensor
- 11: Taster mit Status-LED
- 12: Direktlichtquelle
- 13: Indirektlichtquelle
- 14: Betriebsgerät
- 15: Steuerung
- 16: Leuchtenrahmenkopf
- 17: Standrohrbefestigung
- 18: Stehleuchte
- 19: Direktlichtanteil
- 20: Indirektlichtanteil
- 21: Arbeitstisch
- 22: Sehaufgabenbereich
- 23: Nach oben abstrahlende LEDs
- 24: Nach unten abstrahlende LEDs
- 25: Direktlicht-LEDs
- 26: Leuchtenkopf
- 27: Detektionsbereich eines nicht gerichteten Lichtsensors
- 28: Gewünschter Detektionsbereich des Lichtsensors (OCLS)
- 29: Detektionszentrum/-Fokus eines nicht gerichteten Lichtsensors
- 30: Indirektlicht-LED Panel
- 31: Reflektortrennschicht
- 32: Lichtleiterplatte indirekt
- 33: Lichtleiterplatte direkt
- 34: Detektionszentrum/-Fokus eines gerichteten Lichtsensors (OCLS)

## Patentansprüche

1. Stehleuchte (18) aufweisend eine Steuerungselektronik für die Lichtleistung, wobei die Stehleuchte mindestens zwei Leuchtmittel (12,13) umfasst, welche mit der Steuerungselektronik asynchron ansteuerbar bzw. regulierbar sind, wobei mindestens ein Leuchtmittel (12) einen Direktlichtanteil zur Beleuchtung einer Arbeitsfläche erzeugt und mindestens ein Leuchtmittel (13) einen Indirektlichtanteil erzeugt, der von der Stehleuchte nicht in Richtung der Arbeitsfläche abgestrahlt wird, wobei die Steuerungselektronik speicherprogrammierbar ist und mit ihr nach Massgabe des aktuellen Tageslichtes bei ansteigendem Tageslicht oder Fremdlicht der für die Beleuchtung der Arbeitsfläche ineffizientere Indirektlichtanteil und der für die Beleuchtung der Arbeitsfläche effizientere Direktlichtanteil herunterdimmbar und ausschaltbar sind, ***dadurch gekennzeichnet,* dass** die Steuerungselektronik dazu eingerichtet ist bei ansteigendem Tageslicht oder Fremdlicht zuerst nur den Indirektlichtanteil bis zu 40% zu dimmen, und danach den effizienteren Direktlichtanteil von 100% auf 0% Lichtleistung zusammen mit dem Indirektlichtanteil von 40% auf 0% Lichtleistung herunterzudimmen und dann auszuschalten, wobei die Steuerungselektronik weiter dazu eingerichtet ist die Lichtleistung bei absinkendem Tageslicht umgekehrt zu dimmen.

2. Stehleuchte (18) mit zugehöriger Steuerungelektronik für die Lichtleistung nach Anspruch 1, **dadurch gekennzeichnet, dass** mittels der Steuerungelektronik bei steigendem bzw. fallendem Tageslichtniveau anhand eines gespeicherten Soll-Helligkeitswert die Lichtstärke auf ein definiertes Helligkeitsniveau regulierbar ist, und dieser Soll-Helligkeitswert bei einer manueller Betätigung der Dimmfunktion zeitverzögert automatisch speicherbar ist.

3. Stehleuchte (18) mit zugehöriger Steuerungselektronik für die Lichtleistung nach einem der vorangehenden Ansprüche, **dadurch gekennzeichnet, dass** zur Schonung der Leuchtmittel und zur Verbesserung der Lichtergonomie die Leuchtmittel im Zug eines automatischen Ein- und Ausschaltvorgangs jeweils durch Dimmung mit einer bestimmten Zeitdauer ein- bzw. ausschaltbar sind, wobei diese Zeitdauer bzw. Nachlaufzeit mittels eines Potentiometers von 2min. bis max. 30min. einstellbar ist.

4. Stehleuchte (18) mit zugehöriger Steuerungselektronik für die Lichtleistung nach einem der vorangehenden Ansprüche, **dadurch gekennzeichnet, dass** die Leuchtmittel (12,13) nach einem Stromausfall durch die Steuerungselektronik durch ein integriertes Memory so betreibbar ist, dass sie einschaltet, wenn sie zuvor eingeschaltet war, bzw. nicht einschaltet, wenn sie bereits zuvor nicht eingeschaltet war.

5. Stehleuchte (18) mit zugehöriger Steuerungselektronik für die Lichtleistung nach einem der vorangehenden Ansprüche, **dadurch gekennzeichnet, dass** im Betrieb der Leuchtmittel (12,13) unter Volllast diese Leuchtmittel, gesteuert durch die Steuerungselektronik, mit einem PWM-Signal betreibbar sind, sodass die Leistung auf die einzelnen Leuchtmittel kalibrierbar ist, oder dass eine Kalibrierung per Amplitudendimmung anwendbar ist, über welche die jeweiligen Leuchtmittel bei Volllast verschieden betreibbar sind.

6. Stehleuchte (18) mit zugehöriger Steuerungselektronik für die Lichtleistung nach einem der vorangehenden Ansprüche, **dadurch gekennzeichnet, dass** für ihren Einsatz als Mehrfach-Arbeitsflächenleuchte mehrere separate Licht- und Bewegungssensoren vorhanden sind, mittels derer die Leuchtmittel pro Arbeitsfläche spezifisch und unabhängig voneinander steuerbar sind, für das Ein-/Ausschalten sowie das Dimmen, und die Leuchtmittel zudem durch manuelles Betätigen von Bedienelementen wie z.B. Tastern am Standrohr der Stehleuchte oder am Leuchtenkopf der Stehleuchte separat dimmbar bzw. ein- und ausschaltbar sind, wobei der Soll-Helligkeitswert pro Arbeitsfläche separat mit einer Zeitverzögerung speicherbar ist, und wobei mittels Distanzsensoren die Höhe der Arbeitsfläche ermittelbar und die Lichtleistung bei höhenverstellbaren Tischen auf den hinterlegten Soll-Helligkeitswert regulierbar ist.

7. Stehleuchte (18) mit zugehöriger Steuerungselektronik für die Lichtleistung nach einem der vorangehenden Ansprüche, **dadurch gekennzeichnet, dass** ein automatisches Einschalten der Stehleuchte durch einen auf dem Zufall basierenden Einschalt-Algorithmus zeitverzögert bewirkbar ist, um ein Aufkumulieren der Einschaltströme zu verringern.

8. Stehleuchte (18) mit zugehöriger Steuerungselektronik für die Lichtleistung nach einem der vorangehenden Ansprüche, **dadurch gekennzeichnet, dass** bei einer Stehleuchte ein zugehöriges Betriebsgerät vorhanden ist, das durch ein Relais der Steuerungselektronik ausschaltbar ist, und ein Ausschalten bei der Regulierung nach Massgabe des aktuellen Tageslichtes mit einer Zeitverzögerung bewirkbar ist, sodass eine Ausschaltung erst erfolgt, wenn ein programmierter Soll-Helligkeitswert durch das Umgebungslicht erreicht ist, und wenn dieser Soll-Helligkeitswert vom Umgebungslicht nicht erreicht ist das Einschalten des Betriebsgeräts durch das Relais ohne Zeitverzögerung bewirkbar ist.

9. Stehleuchte (18) mit zugehöriger Steuerungselektronik für die Lichtleistung nach Anspruch 1, **dadurch gekennzeichnet, dass** mit ihr eine nicht lineare Dimmkurve erzeugbar ist, indem diese Dimmkurve soweit optimierbar ist, dass im Bereich zu beleuchtenden Arbeitsfläche die Lichtstärke auf eine möglichst konstante Beleuchtungsstärke nachregelbar ist und je nach Helligkeit der zu beleuchtenden Arbeitsfläche eine spezifische Dimmkurve hinterlegbar ist, mit einer spezifischen Dimmkurve bzw. Kalibrierung durch die Ermittlung des maximalen Lichteinflusses der Leuchte in Bezug auf den gemessenen Helligkeitswert des Lichtsensors.

10. Stehleuchte (18) mit zugehöriger Steuerungselektronik für die Lichtleistung nach einem der vorangehenden Ansprüche, **dadurch gekennzeichnet, dass** ein Dimmverhalten bzw. eine Dimmkurve durch Kalibrierung in Abhängigkeit einer Helligkeit der zu beleuchtenden Arbeitsfläche und einer vorhandenen Raumgeometrie, nämlich der Raumgrösse und des Reflektionsgrades der Umgebungsoberflächen anpassbar und optimierbar ist.

## Claims

1. Floor lamp (18) having an electronic control system for the light output, wherein the floor lamp comprises at least two lighting means (12, 13) which can be controlled asynchronously with the electronic control system, or wherein at least one lighting means (12) generates a direct light component for illuminating a work surface and at least one lighting means (13) generates an indirect light component which is not emitted by the free-standing luminaire in the direction of the work surface, wherein the control electronics can be stored-programmed and can be used to dim down and switch off the indirect light component, which is more inefficient for illuminating the work surface, and the direct light component, which is more efficient for illuminating the work surface, in accordance with the current daylight, with increasing daylight or extraneous light, and the indirect light component, which is more efficient for illuminating the work surface, **characterized in that** the control electronics are adapted to first dim only the indirect light component up to 40% when the daylight or extraneous light increases, and then to dim the more efficient direct light component from 100% to 0% light output together with the indirect light component from 40% to 0% light output and then to switch it off, wherein the control electronics are further adapted to dim the light output inversely when the daylight decreases.

2. Floor lamp (18) with associated control electronics for the light output according to claim 1, **characterised in that** the light intensity can be regulated to a defined brightness level by means of the control electronics when the daylight level rises or falls on the basis of a stored desired brightness value, and this desired brightness value can be automatically stored with a time delay when the dimming function is actuated manually.

3. Floor lamp (18) with associated control electronics for the light output according to one of the preceding requirements, **characterised in that**, in order to protect the lighting means and to improve the light ergonomics, the lighting means can be switched on or off in the course of an automatic switching-on and switching-off process by dimming with a specific time duration, wherein this time duration or follow-up time can be set by means of a potentiometer from 2 min. to a maximum of 30 min.

4. Floor lamp (18) with associated control electronics for the light output according to one of the preceding claims, **characterised in that**, after a power failure, the lighting means (12, 13) can be operated by the control electronics through an integrated memory in such a way that it switches on if it was previously switched on, or does not switch on if it was already not previously switched on.

5. Floor lamp (18) with associated control electronics for the light output according to one of the preceding claims, **characterized in that**, during operation of the lighting means (12, 13) under full load, these lighting means, controlled by the control electronics, can be operated with a PWM signal so that the output can be calibrated to the individual lighting means, or **in that** a calibration by amplitude dimming can be applied, via which the respective lighting means can be operated differently under full load.

6. Floor lamp (18) with associated control electronics for the light output according to one of the preceding claims, **characterised in that**, for its use as a multiple work surface lamp, a plurality of separate light and movement sensors are provided, by means of which the lighting means per work surface can be controlled specifically and independently of one another, for switching on/off and for dimming, and the lighting means can also be controlled by manual actuation of operating elements such as, for example, buttons on the standpipe of the free-standing luminaire or on the luminaire head of the free-standing luminaire by which they are separately dimmable or can be switched on and off separately, wherein the desired brightness value per work surface can be stored separately with a time delay, and wherein the height of the work surface can be determined by means of distance sensors and the light output of height-adjustable tables can be regulated to the stored desired brightness value.

7. Floor lamp (18) with associated control electronics for the light output according to one of the preceding claims, **characterised in that** automatic switching on of the floor lamp can be effected with a time delay by a switching on algorithm based on chance in order to reduce accumulation of the switch-on currents.

8. Floor lamp (18) with associated control electronics for the light output according to one of the preceding claims, **characterised in that** in a floor lamp there is an associated operating device which can be switched off by a relay of the control electronics, and switching off during regulation according to the current daylight can be effected with a time delay, so that switching off only takes place when a programmed desired brightness value has been reached by the ambient light, and when this desired brightness value has been set by the ambient light, and when this desired brightness value has been set by the ambient light, the control electronics of the floor lamp (18) can be switched off by a relay of the control electronics.

9. Floor lamp (18) with associated control electronics for the light output according to claim 1, **characterised in that** a non-linear dimming curve can be generated with it, **in that** this dimming curve can be optimised to such an extent that in the region of the work surface to be illuminated the light intensity can be readjusted to as constant an illuminance as possible and, depending on the brightness of the work surface to be illuminated, a specific dimming curve can be stored with a specific dimming curve or Calibration by determining the maximum light influence of the luminaire in relation to the measured brightness value of the light sensor.

10. Floor lamp (18) with associated control electronics for the light output in accordance with one of the preceding requirements, **characterised in that** a dimming behaviour or a dimming curve can be adapted and optimised by calibration as a function of a brightness of the work surface to be illuminated and an existing room geometry, namely the room size and the degree of reflection of the surrounding surfaces.

## Revendications

1. Lampadaire (18) ayant un système de commande électronique pour le flux lumineux, dans lequel le lampadaire comprend au moins deux moyens d'éclairage (12, 13) qui peuvent être commandés de manière asynchrone avec le système de commande électronique, ou dans laquelle au moins un moyen d'éclairage (12) génère un composant lumineux direct pour éclairer une surface de travail et au moins un moyen d'éclairage (13) génère un composant lumineux indirect qui n'est pas émis par le luminaire autonome dans la direction de la surface de travail, l'électronique de commande pouvant être programmée et utilisée pour réduire et désactiver le composant lumineux indirect qui est plus inefficace pour éclairer la surface de travail et le composant lumineux direct qui est plus efficace pour éclairer la surface de travail en fonction de la lumière naturelle courante, de la lumière naturelle croissante ou d'un autre type, et le composant lumineux indirect **caractérisé en ce que** l'électronique de commande est adaptée pour d'abord varier uniquement la composante de lumière indirecte jusqu'à 40 % lorsque la lumière du jour ou la lumière étrangère augmente, puis pour diminuer la composante de lumière directe la plus efficace de 100 % à 0 % de la puissance lumineuse ensemble avec la composante de lumière indirecte de 40 % à 0 % de la puissance lumineuse, puis pour la désactiver, l'électronique de commande étant adaptée pour diminuer la puissance lumineuse inverse lorsque la lumière du jour diminue.

2. Lampadaire (18) avec électronique de commande associée pour le rendement lumineux selon la revendication 1, **caractérisé en ce que** l'intensité lumineuse peut être réglée à un niveau de luminosité défini au moyen de l'électronique de commande lorsque le niveau de lumière du jour augmente ou diminue sur la base d'une valeur de luminosité souhaitée enregistrée, et cette valeur de luminosité souhaitée peut être automatiquement enregistrée avec une temporisation lorsque la fonction de variation est commandée manuellement.

3. Lampadaire (18) avec électronique de commande associée pour le rendement lumineux selon l'une des exigences précédentes, **caractérisé en ce que**, pour protéger les moyens d'éclairage et améliorer l'ergonomie de la lumière, les moyens d'éclairage peuvent être allumés ou éteints lors d'un processus automatique d'allumage et d'extinction par gradation avec une durée déterminée, cette durée ou durée pouvant être réglée de 2 min à 30 min maximum par un potentiomètre.

4. Lampadaire (18) avec électronique de commande associée pour le rendement lumineux selon l'une des revendications précédentes, **caractérisé en ce que**, après une panne de courant, les moyens d'éclairage (12, 13) peuvent être commandés par l'électronique de commande par une mémoire intégrée de telle sorte qu'ils s'allument lorsqu'ils étaient allumés précédemment ou ne s'allument pas s'ils ne l'étaient déjà.

5. lampadaire (18) avec électronique de commande associée pour le rendement lumineux selon l'une des revendications précédentes, **caractérisé en ce que**, pendant le fonctionnement des moyens d'éclairage (12, 13) à pleine charge, ces moyens d'éclairage, commandés par l'électronique de commande, peuvent fonctionner avec un signal PWM afin que le rendement puisse être calibré pour les différents moyens d'éclairage, ou **en ce que** l'on peut appliquer une calibration par variation d'amplitude, par laquelle les moyens d'éclairage respectifs peuvent fonctionner autrement sous pleine charge.

6. Lampe de sol (18) avec électronique de commande associée pour la puissance lumineuse selon l'une des revendications précédentes, **caractérisée en ce qu'**il est prévu, pour son utilisation comme lampe à surface de travail multiple, une pluralité de capteurs de lumière et de mouvement séparés, au moyen desquels les moyens d'éclairage par surface de travail peuvent être commandés spécifiquement et indépendamment les uns des autres pour allumer et éteindre et pour varier, et les moyens d'éclairage peuvent également être commandés manuellement par l'actionnement des organes de commande tels que par exemple, boutons sur le tube de la lampe standard ou sur la tête de lampe de la lampe standard peut être variée ou allumée et éteinte séparément, la valeur de luminosité de consigne par surface de travail pouvant être mémorisée séparément avec une temporisation, et la hauteur de la surface de travail pouvant être déterminée au moyen de capteurs de distance et la puissance lumineuse des tables réglables en hauteur pouvant être réglée sur la valeur de luminosité cible mémorisée.

7. Lampadaire (18) avec électronique de commande associée pour le rendement lumineux selon l'une des revendications précédentes, **caractérisé en ce que** l'allumage automatique du lampadaire peut être effectué avec un retard de temps par un algorithme d'allumage basé sur le hasard afin de réduire l'accumulation des courants d'allumage.

8. Lampadaire (18) avec électronique de commande associée pour le flux lumineux selon l'une des revendications précédentes, **caractérisé en ce que**, dans le cas d'un lampadaire, il existe un dispositif de commande associé qui peut être désactivé par un relais de l'électronique de commande et qui peut être désactivé pendant la régulation selon la lumière du jour actuelle avec une temporisation, de sorte que l'appareil ne s'éteigne pas tant que la lumière ambiante n'a pas atteint une valeur de luminosité programmée et que la lumière ambiante n'a pas atteint cette valeur de luminosité réglée, l'activation de l'appareil de commande par le relais peut être effectuée sans temporisation.

9. Lampadaire (18) avec électronique de commande associée pour le rendement lumineux selon la revendication 1, **caractérisée en ce qu'**une courbe de variation non linéaire peut être générée avec elle, **en ce que** cette courbe de variation peut être optimisée dans une mesure telle que dans la zone du plan de travail à éclairer l'intensité lumineuse peut être ajustée à une luminance aussi constante que possible et, selon l'intensité de la surface à éclairer, une courbe spécifique peut être enregistrée avec une courbe de variation déterminée ou Etalonnage par détermination de l'influence lumineuse maximale du luminaire en fonction de la valeur de luminosité mesurée par le capteur de lumière.

10. Lampadaire (18) avec électronique de commande associée pour le flux lumineux selon l'une des exigences précédentes, **caractérisé en ce qu'**un comportement de gradation ou une courbe de gradation peut être adapté et optimisé par calibrage en fonction d'une luminosité du plan de travail à éclairer et d'une géométrie de pièce existante, à savoir la dimension de la pièce et le degré de réflexion des surfaces environnantes.
